# EUROPEAN PATENT SPECIFICATION

(11) **EP 3 084 888 B1**
(45) Date of publication and mention of the grant of the patent: **17.10.2018**
(21) Application number: 13815754.0
(22) Date of filing: 20.12.2013
(51) Int. Cl.: H01R 4/34, H01R 4/64, A47J 37/00

(54) **HOUSEHOLD APPLIANCE COMPRISING EARTH TERMINAL WITH FACILITATED MOUNTABILITY**
HAUSHALTSGERÄT MIT ERDUNGSKLEMME MIT ERLEICHTER MONTIERBARKEIT
APPAREIL MÉNAGER COMPRENANT UN BORNE DE TERRE AYANT UNE APTITUDE AU MONTAGE FACILITÉE

(43) Date of publication of application: 26.10.2016
(73) Proprietor: Arçelik Anonim Sirketi, 34950 Istanbul (TR)
(72) Inventor: ARSLANTEKIN, Ihsan, 34950 Istanbul (TR); KARAER, Erol, 34950 Istanbul (TR); YORUK, Hasan, 34950 Istanbul (TR)
(86) International application number: PCT/EP2013/077793
(87) International publication number: WO 2015/090466

(56) References cited:
- DE-C1- 3 540 135
- DE-U1-202005 004 308
- JP-A- 2004 253 167

## Description

The present invention relates to a household appliance, in particular an oven, comprising an earth terminal.

As a general rule to avoid any risk of electric shock, any exposed conductive parts of a household appliance must be kept at earth potential. Therefore, it is necessary to connect the household appliance to an electric power supply with a protective ground. In a household appliance, in particular in an oven, the cooking chamber is typically enclosed by a metal casing which is formed by a sheet metal lining. A user frequently touches the sheet metal lining as he or she places an item to be cooked into the cooking chamber. Therefore, the metal sheet lining must be generally connected to the protective ground.

In a commonly used technique, the protective ground is first connected to a ring terminal or spade terminal. Subsequently the ring terminal or spade terminal is directly fixed to a metal chassis of the household appliance through a screw or bolt.

CN 201074854 (Y) discloses an oven which comprises an oven body and a power cord. An earth terminal which is connected to the protective ground of the power cord is installed on a top plate of the oven body through a screw.

In another commonly used technique, the protective ground is connected to a female/male terminal which can be releasably fitted to a male/female terminal fitting. In this technique the male/female terminal fitting is fixed to a metal chassis of the household appliance through a screw or bolt.

JP 2003-151652 (A) discloses an earth terminal. The earth terminal includes a fixing member which is made of a conductive metal plate and which has a bolt insertion hole. The earth terminal further includes a female terminal fitting part which extends from the fixing member. The fixing member is fastened to a vehicle through a threaded bolt. The male terminal is releasably fitted into the female terminal fitting part. DE 35 40 135 C1 discloses an earth terminal suitable for use in household appliance comprising a sheet metal lining. The earth terminal comprises a fixing plate which has one through hole for receiving a fixing screw and a terminal connection plate which has one connector adapted to respectively receive one terminal. The earth terminal further comprises an intermediate plate which electrically joins the fixing plate and the terminal connection plate, wherein the intermediate plate has an s-shaped form.

A drawback of the above prior arts is that when the bolt is screwed, those
parts which contact the bolt eventually start to rotate together with the screw. For example, as the bolt is screwed tightly into the chassis, the ring terminal starts to rotate and the protective ground wire gets entangled or misaligned. The same also happens to the aforementioned fixing member namely, as the bolt is screwed tightly into the chassis, the fixing member starts to rotate and eventually aligns in an unfavorable direction. Thus, the person entrusted with the mounting task spends extra time to prevent rotation of the parts such as the ring terminal, the fixing member or the like.

An objective of the present invention is to provide a houeshold appliance comprising an earth terminal which overcomes the aforementioned drawbacks of the prior art and which has an improved usability.

This objective has been achieved by the household appliance according to the present invention as defined in claim 1. Further achievements have been attained by the subject-matters respectively defined in the dependent claims.

The household appliance of the present invention, in particular an oven comprises a sheet metal lining which includes a first segment and a second segment, wherein the second segment is offset relative to the first segment towards a bottom of the oven so as to form a shoulder segment which joins the first segment and a second segment. The earth terminal comprises an intermediate plate which joins a fixing plate and a terminal connection plate. The intermediate plate has an s-shaped form which matches the shoulder segment.

The earth terminal is prevented from rotation as the fixing plate is installed onto the metal sheet lining though a screw by virtue of the form-fitting contact between the intermediate plate and the shoulder segment.

In an embodiment, the terminal connection plate includes two connectors each for receiving a respective terminal, in particular a ring terminal and a blade terminal such as a female blade terminal. Thereby, different kind of terminals can be readily fitted to the earth terminal. Thus, the usability of
the earth terminal has been improved.

In another embodiment, the connector for the ring terminal is configured by a threaded through-hole and two opposing side walls which enclose the threaded through hole. Thereby, the ring terminal is prevented from rotating as it is fitted to the connector through a screw by virtue of the two side walls which functions as a stop. In this embodiment, the connector for the female blade terminal is configured by a metal insert.

In another embodiment, the connector for the ring terminal has a ribbed surface which surrounds the threaded through hole. Thereby, the ring terminal is further prevented from rotating as it is fitted to the connector through the screw by virtue of the ribs on the connector surface.

By the present invention, an household appliance has been provided in which the earth terminal is prevented from rotation during an assembly process involving screws or the like. Thereby, any shortcoming of an electrical wiring of a terminal when fitting the same to the respective connector due to a misalignment of the earth terminal or any breakage of said electrical wiring due to over-twisting of the earth terminal have been both obviated. Manufacturing errors have been avoided. Thereby, an orderly and easy assemblage of the earth terminal with the oven has been made possible.

The earth terminal of the household appliance of the present invention is not limited to an oven. The earth terminal can be installed into in any electrical appliance which has a chassis with a shoulder segment that matches the s-shaped form of the intermediate segment.

Additional advantages of the household appliance according to the present invention will become apparent with the detailed description of the embodiments with reference to the accompanying drawings in which:
Figure 1 - is a schematic perspective view of an earth terminal of a household appliance according to an embodiment of the present invention.
Figure 2 - is a schematic perspective partial view of a househould appliance according to an embodiment of the present invention, i.e. an oven which has an earth terminal.
Figure 3 - is a schematic exploded perspective partial view of the oven shown in Fig. 2.

The reference signs appearing on the drawings relate to the following technical features.
3a. First segment
3b. Second segment
3c. Shoulder segment
8a. First portion
8b. Second portion
9. Connector
9a. First connector
9b. Second connector
10. Terminal
10a. Ring terminal
   10b. Female blade terminal
11. Intermediate plate
12. Protrusions
13. Threaded through hole
14. Side walls
15. Insert
16. Ribbed surface
17. Cooking chamber
18. Casing
19. Ceiling
20. Fixing Screw

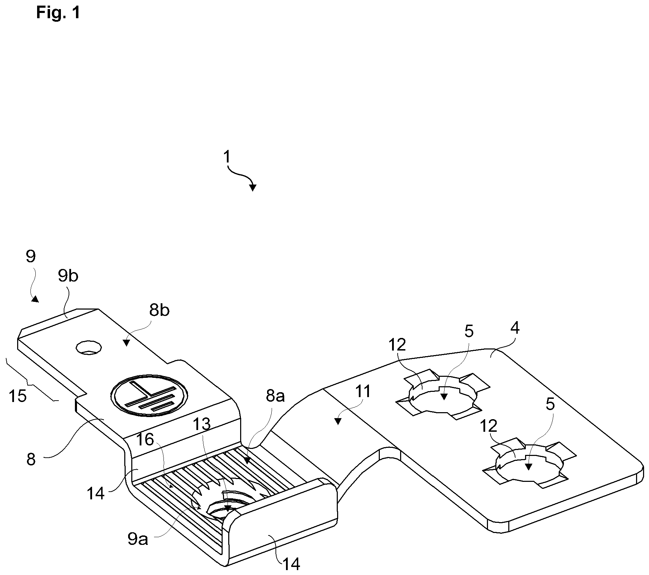

The earth terminal (1) is suitable for use in household appliance (2), in particular an oven comprising a sheet metal lining (3) which includes a first segment (3a) and a second segment (3b), wherein the second segment
(3b) is offset relative to the first segment (3a) towards a bottom of the household appliance (2) so as to form a shoulder segment (3c) which joins the first segment (3a) and the second segment (3b) (Figs. 1 to 3). The earth terminal (1) comprises a fixing plate (4) which has one or more than one through hole (5) each for receiving a fixing screw (6) to be screwed into a respective threaded through hole (7) formed on the first segment (3a) and a terminal connection plate (8) which has one or more than one connector (9) adapted to respectively receive one or more than one terminal (10) (Figs. 1 to 3).

The earth terminal (1) of the household appliance according to the present invention further comprises an intermediate plate (11) which joins the fixing plate (4) and the terminal connection plate (8). The intermediate plate (11) has an s-shaped form which matches the shoulder segment (3c) (Figs. 1 to 3).

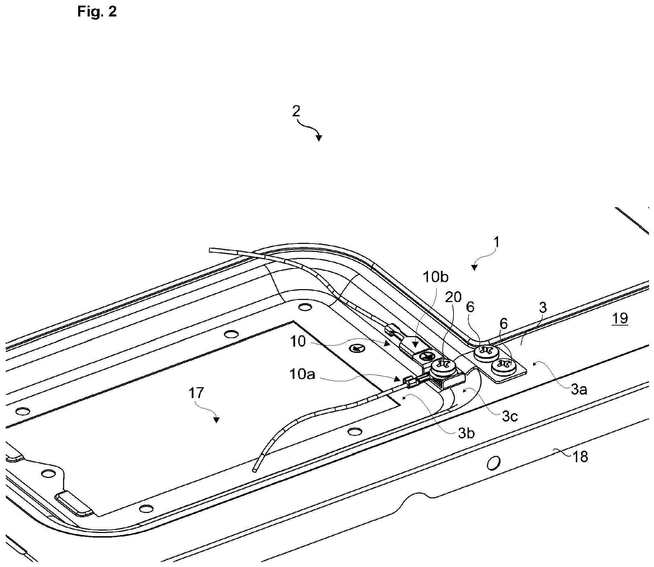

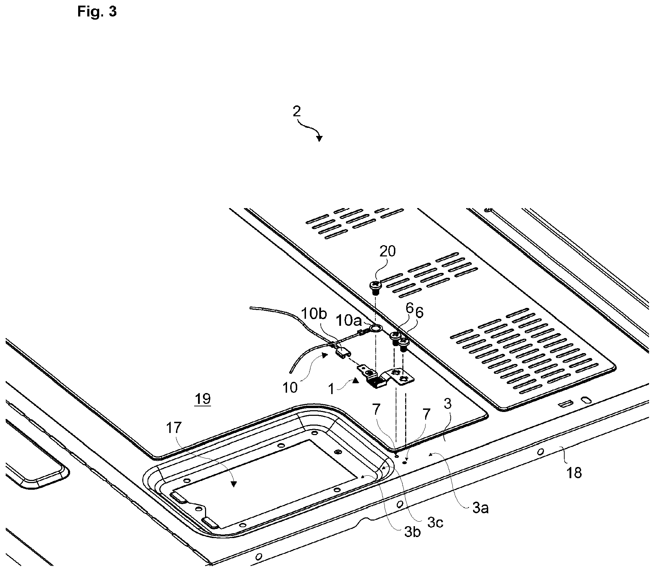

When mounting the earth terminal (1) to the sheet metal lining (3), primarily the fixing plate (4) is placed on the first segment (3a) such that intermediate plate (11) is positioned on the shoulder segment (3c) and said one or more than one through hole (5) is aligned with the respective one or more than one threaded through hole (7) (Fig. 3). After placing and aligning the earth terminal (1), the fixing plate (4) is firmly fixed to the first segment (3a) by one or more than one screw (6) (Fig. 2). The fixing plate (4) is prevented from rotation during the screwing step by virtue of the s-shaped form of the intermediate plate (11) which form-fittingly contacts the shoulder segment (3c) (Figs. 2 and 3). Thus, the earth terminal (1) remains at its designated position throughout the assembly process. Hence, a risk of shortcoming of the wiring of the terminal (10) to the connector (9) is obviated. Thus, the terminal (10) can be provided with the exact minimal wiring length such that unnecessary wiring cost can be saved (Fig. 2).

In an embodiment, the fixing plate (4) is a flat structure which includes two through holes (5) each for receiving a fixing screw (6) (Fig. 1). Thereby, the fixing plate (4) can be reliably secured to the sheet metal lining (3) (Fig. 2).

In another embodiment, the fixing plate (4) has a plurality of protrusions (12) formed on its rear surface around each through hole (5) (Fig. 1). The protrusions (12) abut the first segment (3a) when the fixing plate (4) is screwed onto the sheet metal lining (3). Thereby, the fixing plate (4) squeezes the sheet metal lining (3) and an engagement between the two improves.

In another embodiment, the terminal connection plate (8) includes a first connector (9a) and a second connector (9b) (Figs. 2 and 3). In this embodiment, the first connector (9a) is adapted to receive a ring terminal (10a) whereas the second connector (9b) is adapted to receive a blade terminal (10b), in particular a female blade terminal (10b). Thereby, different kind of terminals (10a, 10b) can be readily fitted to the earth terminal (1). Thus, the usability of the earth terminal (1) has been improved.

In another embodiment, the first connector (9a) is configured by a threaded through-hole (13) and two side walls (14) which enclose the threaded through hole (13) (Fig. 1). In a version of this embodiment, the side walls are parallel to each other and extend vertically upwards (Fig. 1). The threaded through-hole (13) and two side walls (14) are integrally formed by a first portion (8a) of the terminal connection plate (8) (Fig. 1). The ring terminal (10a) is prevented from rotation as it is fitted to the first connector (9a) through a screw (20) by virtue of the two side walls (14) (Figs. 2 and 3). The side walls (14) are opposingly arranged around the threaded through hole (13) so as to inhibit rotation of the ring terminal (10a) in either directions (Figs. 2 and 3). In this embodiment, the second connector (9b) is configured by an insert (15) which is formed by a second portion (8b) of the terminal connection plate (8) (Fig. 1). In another version of this embodiment, the female blade terminal (10b) and the insert (15) have a stud/tab size 6.3 x 0.8 mm. In another version of this embodiment, the screw (20) for fixing the ring terminal (10a) to the first connector (9a) is of M4 type with 4mm diameter. The present invention is not limited to any specific size for the blade terminal (10b) and the screw (20).

In another embodiment, the first connector (9a) is further configured by a ribbed surface (16) formed in the vicinity of the threaded through hole (13)
(Fig. 1). The ribbed surface (16) is formed by the first portion (8a) of the terminal connection plate (8) (Fig. 1). The ring terminal (10a) is further prevented from rotation as it is fitted to the first connector (9a) through the screw (20) by virtue of the ribbed surface (16) (Figs. 2 and 3).

In another embodiment, the insert (15) adjoins an upper end of one of the vertical side walls (14) (Fig. 1). Thereby, a simple compact structure has been attained which is also easy to manufacture.

In another embodiment, the insert (15) extends in a direction which is perpendicular to a lateral surface of the vertical side walls (14). Thus, the terminals (10) extend in transverse directions. Thereby, the usability of the earth terminal has been improved.

In another embodiment, the fixing plate (4), the terminal connection plate (8), and the intermediate plate (11) are manufactured as an electrically conductive monolithic metal structure. In a version of this embodiment, the earth terminal (1) is manufactured by a pressing process.

The present invention provides a household appliance (2). In an embodiment, the household appliance (2) is an oven (Figs. 2 and 3).

The household appliance (2) comprises a cooking chamber (17) and a casing (18) which encloses the cooking chamber (17) (Figs. 2 and 3). The casing (18) is formed by a sheet metal lining (3) which includes a first segment (3a) and a second segment (3b). The second segment (3b) is offset relative to the first segment (3a) towards a bottom of the cooking chamber (17) so as to form a shoulder segment (3c) which joins the first segment (3a) and a second segment (3b) (Figs. 2 and 3).

The household appliance (2) according to the present invention further comprises an earth terminal (1) which is fixed to the first segment (3a) and one or more than one terminal (10) connected to the earth terminal (1) (Figs. 2 and 3).

In another embodiment, the first segment (3a) and the second segment (3b) configure a ceiling (19) of the casing (18) (Figs. 2 and 3). In alternative embodiments, the shoulder (3c) is respectively formed on one of a rear an lateral walls of the cooking chamber (17).

In another embodiment, the household appliance (2) comprises a ring terminal (10a) which is mounted to the first connector (9a) by a screw (20) and a female blade terminal (10b) which is mounted to the second connector (9b) by way of insertion (Figs. 2 and 3).

By the present invention, a household appliance has been provided in which the earth terminal is prevented from rotation during an assembly process involving screws (6) and the like. Also the ring terminal (10a) has been prevented from rotating during an assembly process involving a screw (20). Thus, any shortcoming of the wiring of the terminals (10a, 10b) when fitting the same to the respective first and second connectors (9a, 9b) due to a misalignment of the earth terminal (1) or any breakage of said wiring due to over-twisting of the earth terminal (1) have been both obviated. Thereby, an orderly and easy assemblage of the earth terminal (1) with the household appliance (2) has been made possible.

The earth terminal (1) of the household appliance of the present invention is not limited for use in an oven. It can be used in any household appliance (2) which has a chassis including a shoulder segment (3c) that matches the s-shaped form of the intermediate segment (11).

## Claims

1. A household appliance (2), in particular an oven comprising a cooking chamber (17) and a casing (18) which encloses the cooking chamber (17), the casing (18) being formed by a sheet metal lining (3) which includes a first segment (3a) and a second segment (3b), wherein the second segment (3b) is offset relative to the first segment (3a) towards a bottom of the cooking chamber (17) so as to form a shoulder segment (3c) which joins the first segment (3a) and the second segment (3b), further comprising an earth terminal (1) which is fixed to the first segment (3a) and one or more than one terminal (10) which is connected to the earth terminal (1), with the earth terminal (1) comprising a fixing plate (4) which has one or more than one through hole (5) each for receiving a fixing screw (6) to be screwed into a respective threaded through hole (7) formed on the first segment (3a) and a terminal connection plate (8) which has one or more than one connector (9) adapted to respectively receive one or more than one terminal (10),
**characterized by** an intermediate plate (11) which electrically joins the fixing plate (4) and the terminal connection plate (8), wherein the intermediate plate (11) has an s-shaped form which matches the shoulder segment (3c).

2. The household appliance (2) according to claim 1, **characterized in that** the fixing plate (4) is a flat structure which includes two through holes (5) each for receiving a fixing screw (6).

3. The household appliance (2) according to claim 1 or 2, **characterized in that** the fixing plate (4) has a plurality of protrusions (12) formed on a rear surface of said fixing plate (4) around each through hole (5) so as to abut the first segment (3a).

4. The household appliance (2) according to any one of claims 1 to 3, **characterized in that** the terminal connection plate (8) includes a first connector (9a) for receiving a ring terminal (10a) and a second connector (9b) for receiving a female blade terminal (10b).

5. The household appliance (2) according to claim 4, **characterized in that** the first connector (9a) is configured by a threaded through hole (13) and two side walls (14) which enclose the threaded through hole (13), the threaded through hole (13) and two side walls (14) being formed by a first portion (8a) of the terminal connection plate (8) and the second connector (9b) is configured by an insert (15) which is formed by a second portion (8b) of the terminal connection plate (8).

6. The household appliance (2) according to claim 5, **characterized in that** the first connector (9a) is further configured by a ribbed surface (16) which surrounds the threaded through hole (13), wherein the ribbed surface (16) is formed by the first portion (8a) of the terminal connection plate (8).

7. The household appliance (2) according to claim 5 or 6, **characterized in that** the insert (15) adjoins an upper end of one of the side walls (14).

8. The household appliance (2) according to any one of claims 5 to 7, **characterized in that** the insert (15) extends in a direction which is perpendicular to a lateral surface of each side wall (14).

9. The household appliance (2) according to any one of claims 1 to 8, **characterized in that** the fixing plate (4), the terminal connection plate (8), and the intermediate plate (11) define an electrically conductive monolithic structure.

10. The household appliance (2) according to any one of claims 1 to 9, **characterized in that** the first segment (3a) and the second segment (3b) configure a ceiling (19) of the casing (18).

11. The household appliance (2) according to any of claims 1 to 10, **characterized in that** a ring terminal (10a) mounted to the first connector (9a) by a screw (20) and a female blade terminal (10b) mounted to the second connector (9b) by way of insertion.

## Patentansprüche

1. Haushaltsgerät (2), insbesondere ein Ofen, umfassend eine Kochkammer (17) und ein Gehäuse (18), das die Kochkammer (17) umschließt, wobei das Gehäuse (18) durch einen Blechbelag (3) gebildet ist, der ein erstes Segment (3a) und ein zweites Segment (3b), wobei das zweite Segment (3b) gegenüber dem ersten Segment (3a) gegen einen Boden der Kochkammer (17) versetzt ist, um ein Schultersegment (3c) zu bilden, das das erste Segment (3a) und das zweite Segment (3b) miteinander verbindet, ferner umfassend Erdungsanschluss (1), der an dem ersten Segment (3a) befestigt ist, und einen oder mehr als einen Anschluss (10), der mit dem Erdungsanschluss (1) verbunden ist,
mit einem Erdungsanschluss (1) umfassende eine Befestigungsplatte (4), die ein oder mehr als ein Durchgangsloch (5) aufweist, jeweils zur Aufnahme einer Befestigungsschraube (6), die in ein jeweiliges Durchgangsgewinde (7) einzuschrauben ist, das an dem ersten Segment (3a) und ausgebildet ist eine Anschlussverbindungsplatte (8), die einen oder mehr als einen Verbinder (9) aufweist, der angepasst ist, um jeweils ein oder mehr als ein Anschluss(10) zu aufzunehmen,
**gekennzeichnet durch** eine Zwischenplatte (11), die die Befestigungsplatte (4) und die Anschlußverbindungsplatte (8) elektrisch verbindet, wobei die Zwischenplatte (11) eine S-förmige Form aufweist, die mit dem Schultersegment (3c) übereinstimmt.

2. Haushaltsgerät (2) nach Anspruch 1, **dadurch gekennzeichnet, dass** die Befestigungsplatte (4) eine flache Struktur ist, die zwei Durchgangslöcher (5) jeweils zur Aufnahme einer Befestigungsschraube(6) aufweist.

3. Haushaltsgerät (2) nach Anspruch 1 oder 2, **dadurch gekennzeichnet, dass** die Befestigungsplatte (4), die eine Mehrzahl von Vorsprünge (12) aufweist, die auf der hinteren Fläche der Befestigungsplatte (4) um jedes Durchgangsloch (5) herum gebildet sind, um an dem ersten Segment (3a) anzuliegen.

4. Haushaltsgerät (2) nach einem der Ansprüche 1 bis 3, **dadurch gekennzeichnet, dass** die Anschlußverbindungsplatte (8) einen ersten Verbinder (9a) zur Aufnahme eines Ringanschlusses (10a) und einen zweiten Verbinder (9b) zur Aufnahme eines weiblichen Messeranschlusses (10b) aufweist.

5. Haushaltsgerät (2) nach Anspruch 4, **dadurch gekennzeichnet, dass** der erste Verbinder (9a) durch ein Gewindedurchgangsloch (13) und zwei Seitenwände (14) konfiguriert ist, die das mit Gewinde versehene Durchgangsloch (13) umschließen, wobei das Gewindedurchgangsloch (13) und die zwei Seitenwände (14) durch einen ersten Abschnitt (8a) der Anschlußverbindungsplatte (8) gebildet sind und der zweite Verbinder (9b) durch einen Einsatz (15) gebildet ist, der ausgebildet ist durch einen zweiten Abschnitt (8b) der Anschlussverbindungsplatte (8)

6. Haushaltsgerät (2) nach Anspruch 5, **dadurch gekennzeichnet, dass** der erste Verbinder (9a) ferner durch eine gerippte Oberfläche (16) konfiguriert ist, die das Gewindedurchgangsloch (13) umgibt, wobei die gerippte Oberfläche (16) durch den ersten Abschnitt (8a) der Anschlussverbindungsplatte gebildet ist (8).

7. Haushaltsgerät (2) nach Anspruch 5 oder 6, **dadurch gekennzeichnet, dass** der Einsatz (15) an ein oberes Ende einer der Seitenwände (14) angrenzt.

8. Haushaltsgerät (2) nach einem der Ansprüche 5 bis 7, **dadurch gekennzeichnet, dass** sich der Einsatz (15) in einer Richtung erstreckt, die senkrecht zu einer Seitenfläche jeder Seitenwand (14) ist

9. Haushaltsgerät (2) nach einem der Ansprüche 1 bis 8, **dadurch gekennzeichnet, dass** die Befestigungsplatte(4), die Anschlussverbindungsplatte (8) und die Zwischenplatte (11) eine elektrisch leitende monolithische Struktur definieren.

10. Haushaltsgerät (2) nach einem der Ansprüche 1 bis 9, **dadurch gekennzeichnet, dass** das erste Segment (3a) und das zweite Segment (3b) eine Decke (19) des Gehäuses (18) bilden.

11. Haushaltsgerät (2) nach einem der Ansprüche 1 bis 10, **dadurch gekennzeichnet, dass** ein Ringanschluss (10a) an dem ersten Verbinder (9a) durch eine Schraube (20) und einen weiblichen Messeranschluss (10b) angebracht ist, der an dem zweiten Verbinder (9b) durch Einführen angebracht ist.

## Revendications

1. Appareil ménager (2), en particulier un four comprenant une chambre de cuisson (17) et un boîtier (18) renfermant la chambre de cuisson (17), le boîtier (18) étant formé par un revêtement en tôle (3) qui comprend un premier segment (3a) et un second segment (3b), dans lequel le second segment (3b) est décalé par rapport au premier segment (3a) vers le fond de la chambre de cuisson (17) de manière à former un segment d'épaulement (3c) qui relie le premier segment (3a) et le second segment (3b), comprenant en outre une borne de terre (1) qui est fixée au premier segment (3a) et une ou plusieurs bornes (10) qui sont connectées à la borne de terre (1), avec la borne de terre (1) comprenant une plaque de fixation (4) qui comporte un ou plusieurs trous traversants (5) destinés à recevoir chacun une vis de fixation (6) à visser dans un trou traversant (7) respectif formé sur le trou premier segment (3a) et une plaque de connexion de borne (8) qui comporte un ou plusieurs connecteurs (9) adaptés pour recevoir respectivement une ou plusieurs bornes (10),
**caractérisé par** une plaque intermédiaire (11) qui relie électriquement la plaque de fixation (4) et la plaque de connexion de borne (8), dans lequel la plaque intermédiaire (11) a une forme en forme de s qui correspond au segment d'épaulement (3c).

2. Appareil ménager (2) selon la revendication 1, **caractérisé en ce que** la plaque de fixation (4) est une structure plate qui comprend deux trous traversants (5) destinés à recevoir chacun une vis de fixation (6).

3. Appareil ménager (2) selon la revendication 1 ou 2, **caractérisé en ce que** la plaque de fixation (4) présente une pluralité de saillies (12) formées sur une surface arrière de ladite plaque de fixation (4) autour de chaque trou traversant (5) de manière à venir en butée contre le premier segment (3a).

4. Appareil ménager (2) selon l'une des revendications 1 à 3, **caractérisé en ce que** la plaque de connexion de borne (8) comprend un premier connecteur (9a) destiné à recevoir une borne annulaire (10a) et un second connecteur (9b) destiné à recevoir une borne de lame femelle (10b).

5. Appareil ménager (2) selon la revendication 4, **caractérisé en ce que** le premier connecteur (9a) est configuré par un trou traversant fileté (13) et deux parois latérales (14) qui entourent le trou traversant fileté (13), le trou traversant fileté (13) et les deux parois latérales (14) étant formés par une première partie (8a) de la plaque de connexion de borne (8) et le second connecteur (9b) est configuré par un insert (15) formé par une second partie (8b) de la plaque de connexion de borne (8).

6. Appareil ménager (2) selon la revendication 5, **caractérisé en ce que** le premier connecteur (9a) est en outre configuré par une surface nervurée (16) qui entoure le trou traversant fileté (13), dans lequel la surface nervurée (16) est formée par la première partie (8a) de la plaque de connexion de borne (8).

7. Appareil ménager (2) selon la revendication 5 ou 6, **caractérisé en ce que** l'insert (15) se raccorde à une extrémité supérieure de l'une des parois latérales (14).

8. Appareil ménager (2) selon l'une quelconque des revendications 5 à 7, **caractérisé en ce que** l'insert (15) s'étend dans une direction perpendiculaire à une surface latérale de chaque paroi latérale (14).

9. Appareil ménager (2) selon l'une des revendications 1 à 8, **caractérisé en ce que** la plaque de fixation (4), la plaque de connexion de borne (8) et la plaque intermédiaire (11) définissent une structure monolithique électriquement conductrice.

10. Appareil ménager (2) selon l'une quelconque des revendications 1 à 9, **caractérisé en ce que** le premier segment (3a) et le second segment (3b) configurent un plafond (19) du boîtier (18).

11. Appareil ménager (2) selon l'une des revendications 1 à 10, **caractérisé en ce qu'**une borne annulaire (10a) montée sur le premier connecteur (9a) par une vis (20) et une borne de lame femelle (10b) montée sur le second connecteur (9b) par insertion.
